# FASCICULE DE BREVET EUROPEEN

(11) **EP 3 123 014 B1**
(45) Date de publication et mention de la délivrance du brevet: **26.02.2020**
(21) Numéro de dépôt: 15717022.6
(22) Date de dépôt: 20.03.2015
(51) Int. Cl.: F02C 7/262, B64C 27/04, B64D 35/08, F02C 7/275, F02C 9/42

(54) **ARCHITECTURE D'UN SYSTEME PROPULSIF D'UN HELICOPTERE MULTI-MOTEUR ET HELICOPTERE CORRESPONDANT**
ARCHITEKTUR EINES MEHRMOTORIGEN HUBSCHRAUBERANTRIEBSSYSTEMS UND ENTSPRECHENDER HUBSCHRAUBER
MULTI-ENGINED HELICOPTER ARCHITECTURE AND HELICOPTER

(30) Priorité: 27.03.2014 FR 1452651
(43) Date de publication de la demande: 01.02.2017
(73) Titulaire: Safran Helicopter Engines, 64510 Bordes (FR)
(72) Inventeur: MERCIER-CALVAIRAC, Fabien, F-64000 Pau (FR); HUMBERT, Sophie, 77550 Moissy-Cramayel (FR); BEDDOK, Stéphane, 77550 Moissy-Cramayel (FR)
(74) Mandataire: Gevers & Orès
(86) Numéro de dépôt international: PCT/FR2015/050698
(87) Numéro de publication internationale: WO 2015/145042

(56) Documents cités:
- EP-A1- 2 264 297
- EP-A2- 2 404 775
- EP-A2- 2 581 586
- WO-A2-2013/167837
- US-A- 5 899 411

## Description

### 1. Domaine technique de l'invention

L'invention concerne une architecture d'un système propulsif d'un hélicoptère multi-moteur -en particulier bimoteur ou trimoteur- et un hélicoptère comprenant un système propulsif présentant une telle architecture.

### 2. Arrière-plan technologique

L'état de la technique comporte notamment le document EP-A2-2 581 586 qui concerne un système et un procédé permettant de démarrer un moteur d'un aéronef multi-moteur.

Un hélicoptère bimoteur ou trimoteur présente de manière connue un système propulsif comprenant deux ou trois turbomoteurs, chaque turbomoteur comprenant un générateur de gaz et une turbine libre entrainée en rotation par le générateur de gaz, et solidaire d'un arbre de sortie. L'arbre de sortie de chaque turbine libre est adapté pour mettre en mouvement une boite de transmission de puissance (désignée ci-après par l'acronyme BTP), qui entraîne elle-même le rotor de l'hélicoptère équipé de pales à pas variable.

Chaque turbomoteur est en général équipé d'une génératrice-démarreur qui permet d'une part d'assurer le premier démarrage du turbomoteur et d'autre part d'alimenter le réseau de bord basse tension continue de l'hélicoptère en vol (désigné ci-après par l'acronyme RDB). Le RDB est en général relié à un dispositif de stockage d'électricité basse tension, par exemple une batterie de stockage 28 volts.

Il existe aussi des architectures dans lesquelles le RDB est également alimenté par le biais d'un générateur auxiliaire de puissance (plus connu sous l'acronyme anglais APU pour *Auxiliary Power Unit*) et d'un convertisseur alternatif/continu.

Il existe aussi des architectures dans lesquelles les fonctions de démarrage et de génératrice de chaque turbomoteur sont dissociées. Dans ce cas, la fonction génératrice est obtenue par un prélèvement de puissance sur la BTP (en général, du 115 volts alternatif), suivi d'une conversion par un convertisseur alternatif/continu.

Par ailleurs, il est connu que lorsque l'hélicoptère est en situation de vol de croisière (c'est-à-dire lorsqu'il évolue dans des conditions normales, en régime connu sous l'acronyme anglais AEO (All Engines Operative), au cours de toutes les phases du vol, hors phases transitoires de décollage, d'atterrissage ou de vol stationnaire), les turbomoteurs fonctionnent à des puissances faibles, inférieures à leur puissance maximale continue (ci-après, PMC). Dans certaines configurations, la puissance fournie par les turbomoteurs, lors d'un vol de croisière, peut être inférieure à 50 % de la puissance maximale de décollage (ci-après, PMD). Ces faibles niveaux de puissance entraînent une consommation spécifique (ci-après, Cs) définie comme le rapport entre la consommation horaire de carburant par la chambre de combustion du turbomoteur et la puissance fournie par ce turbomoteur, supérieure de l'ordre de 30% à la Cs de la PMD, et une baisse du rendement des turbines à gaz..

Afin de réduire cette consommation en vol de croisière (ou en attente au sol par exemple), il est possible d'arrêter l'un des turbomoteurs et de le placer en régime, dit de veille. Le ou les moteurs actifs fonctionnent alors à des niveaux de puissance plus élevés pour fournir toute la puissance nécessaire et donc à des niveaux de Cs plus favorables.

Dans toute la suite, on désignera par « phase de vol économique », une phase d'un vol au cours de laquelle au moins un turbomoteur est en veille et par « phase de vol classique », une phase d'un vol au cours de laquelle aucun turbomoteur n'est en veille.

Les demandeurs ont proposé dans les demandes FR1151717 et FR1359766, des procédés d'optimisation de la consommation spécifique des turbomoteurs d'un hélicoptère par la possibilité de placer au moins un turbomoteur dans un régime de vol stabilisé, dit continu, et au moins un turbomoteur dans un régime de veille particulier duquel il peut sortir de manière urgente ou normale, selon les besoins. Une sortie du régime de veille est dite normale lorsqu'un changement de situation de vol impose l'activation du turbomoteur en veille, par exemple lorsque l'hélicoptère va passer d'une situation de vol de croisière à une phase d'atterrissage. Une telle sortie de veille normale s'effectue sur une durée de 10s à 1 min. Une sortie du régime de veille est dite urgente lorsqu'une panne ou un déficit de puissance du moteur actif intervient ou que les conditions de vol deviennent soudainement difficiles. Une telle sortie de veille d'urgence s'effectue sur une durée inférieure à 10s.

La sortie d'un mode veille d'un turbomoteur et le passage d'une phase de vol économique à une phase de vol classique est obtenu par exemple par le biais d'un dispositif d'assistance d'urgence qui comprend des bougies à incandescence « glow-up » comme dispositif d'allumage à effet quasi-instantané, en complément des bougies conventionnelles, et une cartouche de propergol alimentant une micro-turbine annexe comme moyen mécanique d'accélération du générateur de gaz du turbomoteur.

Un tel dispositif de redémarrage du turbomoteur en veille présente l'inconvénient d'alourdir sensiblement le poids total du turbomoteur. Le gain en consommation de carburant par la mise en veille du turbomoteur est donc en partie perdu par le surpoids occasionné par le dispositif de redémarrage, en particulier lorsque chaque turbomoteur est équipé d'un tel dispositif de redémarrage d'urgence.

Les inventeurs ont donc cherché à concilier des problèmes a priori incompatibles que sont la possibilité de mettre l'hélicoptère en phase de vol économique, c'est-à-dire de placer au moins un turbomoteur en veille, sans générer un surpoids trop important de l'ensemble du système propulsif et tout en permettant l'alimentation électrique du RDB.

En d'autres termes, les inventeurs ont cherché à proposer une architecture nouvelle du système propulsif d'un hélicoptère bimoteur ou trimoteur.

### 3. Objectifs de l'invention

L'invention vise à fournir une architecture nouvelle du système propulsif d'un hélicoptère multi-moteur.

L'invention vise aussi à fournir une architecture d'un système propulsif d'un hélicoptère multi-moteur qui autorise la mise en veille d'un turbomoteur et son redémarrage rapide.

L'invention vise aussi à fournir, dans au moins un mode de réalisation de l'invention, une architecture qui présente une masse et un volume non rédhibitoires pour pouvoir être embarquée dans un hélicoptère.

L'invention vise aussi à fournir, dans au moins un mode de réalisation de l'invention, une architecture qui présente un coût inférieur aux architectures de l'art antérieur à performances égales.

### 4. Exposé de l'invention

Pour ce faire, l'invention concerne une architecture d'un système propulsif d'un hélicoptère multi-moteur comprenant des turbomoteurs reliés à une boite de transmission de puissance (désigné ci-après par son acronyme BTP), et un réseau de bord basse tension continue (désigné ci-après par son acronyme RDB), destiné à alimenter en vol des équipements de l'hélicoptère.

L'architecture selon l'invention est caractérisée en ce qu'elle comprend :
- un seul turbomoteur parmi lesdits turbomoteurs, dit turbomoteur hybride, apte à fonctionner dans au moins un régime de veille au cours d'un vol stabilisé de l'hélicoptère, les autres turbomoteurs fonctionnant seuls au cours de ce vol stabilisé,
- un pack électrotechnique de redémarrage rapide dudit turbomoteur hybride pour le sortir dudit régime de veille et atteindre un régime, dit régime nominal, dans lequel il fournit une puissance mécanique à ladite boite de transmission de puissance, ledit pack de redémarrage étant relié audit RDB, ledit pack de redémarrage étant un pack haute tension,
- au moins deux sources d'alimentation électrique dudit RDB, et
- un convertisseur basse tension-haute tension agencé entre le RDB et ledit pack de redémarrage.

Un turbomoteur hybride est un turbomoteur configuré pour pouvoir être mis, sur commande et volontairement, dans au moins un régime de veille prédéterminé, duquel il peut sortir de manière normale ou rapide (aussi dite urgente). Un turbomoteur ne peut être en veille qu'au cours d'un vol stabilisé de l'hélicoptère, c'est-à-dire, hors panne d'un turbomoteur de l'hélicoptère, au cours d'une situation de vol de croisière, lorsqu'il évolue dans des conditions normales. La sortie du régime de veille consiste à passer le turbomoteur en mode accélération du générateur de gaz par un entrainement compatible avec le mode de sortie imposée par les conditions (sortie de veille normale ou sortie de veille rapide (aussi dite d'urgence).

L'architecture du système propulsif d'un hélicoptère multi-moteur selon l'invention prévoit donc de ne disposer que d'un turbomoteur hybride adapté pour fonctionner dans un régime de veille. L'architecture selon l'invention est donc dissymétrique et ne présente qu'un seul turbomoteur hybride. Une architecture selon l'invention minimise donc le nombre de composants en ne prévoyant que seul un turbomoteur peut être mis en régime de veille. Seul le turbomoteur hybride est équipé d'un pack électrotechnique de redémarrage, ce qui limite le poids total du système propulsif.

En outre, l'architecture prévoit deux sources d'alimentation électrique du RDB. L'architecture présente donc une redondance de la génération électrique pour l'alimentation du RDB de telle sorte qu'une panne éventuelle de la première source d'alimentation du RDB est supplée par la deuxième source d'alimentation.

Un pack haute tension permet d'obtenir un redémarrage rapide du turbomoteur. Aussi, un convertisseur basse tension-haute tension est agencé entre le RDB basse tension et le pack de redémarrage pour pouvoir alimenter le pack de redémarrage par le RDB.

Avantageusement et selon l'invention, lesdites sources d'alimentation électrique dudit RDB sont choisies dans le groupe comprenant :
- au moins une génératrice agencée entre la BTP et le RDB associée à un convertisseur alternatif-continu,
- une unité auxiliaire de puissance reliée au RDB associée à un convertisseur alternatif-continu,
- une génératrice-démarreur agencée entre un turbomoteur non hybride et le RDB.

Avantageusement et selon l'invention, chaque génératrice et ladite unité auxiliaire de puissance sont adaptées pour fournir une tension alternative de 115 volts et ledit convertisseur associé est adapté pour convertir cette tension alternative de 115 volts en une tension continue de 28 volts.

Toutes les combinaisons sont possibles pour assurer la redondance de l'alimentation électrique du RDB.

Selon une variante avantageuse, une première source d'alimentation électrique est une génératrice agencée entre la BTP et le RDB, associée à un convertisseur alternatif-continu, et une seconde source d'alimentation électrique est une génératrice-démarreur agencée entre un turbomoteur non hybride et le RDB.

Selon cette variante avantageuse, lors d'une phase de vol dite classique d'un hélicoptère bimoteur (c'est-à-dire lorsque tous les turbomoteurs fonctionnent à un régime permettant de fournir de la puissance mécanique à la boite de transmission de puissance), tous les turbomoteurs fournissent à la BTP la puissance nécessaire pour entraîner le rotor de l'hélicoptère. La génération électrique du RDB est fiabilisée par la redondance de la génératrice-démarreur sur le turbomoteur non hybride et de la génératrice agencée sur la BTP associée au convertisseur alternatif-continu.

Lors d'une phase de vol économique, le turbomoteur hybride est en veille et l'autre turbomoteur fournit la puissance nécessaire à la BTP. La génération électrique du RDB est fiabilisée par la redondance de la génératrice-démarreur sur le turbomoteur non hybride et de la génératrice agencée sur la BTP associée au convertisseur alternatif-continu.

En cas de perte du turbomoteur non hybride, le turbomoteur hybride est redémarré d'urgence par le biais du pack électrotechnique de redémarrage. Malgré l'arrêt du turbomoteur non hybride, l'alimentation du RDB est assurée par la génératrice agencée sur la BTP associée au convertisseur alternatif-continu.

Avantageusement, le pack de redémarrage comprend en outre un dispositif de stockage d'énergie électrique haute tension adapté pour accumuler de l'énergie électrique du RDB au cours dudit régime nominal dudit turbomoteur hybride, permettant de fournir de la puissance mécanique à la boite de transmission de puissance, et pour fournir, sur commande, l'énergie électrique accumulée nécessaire à la sortie de veille dudit turbomoteur hybride.

Le redémarrage du turbomoteur en veille est donc obtenu par le biais du dispositif de stockage d'énergie haute tension qui est agencé entre le turbomoteur et le convertisseur basse tension-haute tension.

Avantageusement et selon l'invention, ledit pack de redémarrage est adapté pour fournir, en régime de veille dudit turbomoteur hybride, une énergie électrique de maintien dudit turbomoteur hybride à un régime de veille prédéterminé.

En particulier, un turbomoteur comprend de manière connue un générateur de gaz et une turbine libre alimentée par les gaz du générateur de gaz. Le générateur de gaz comprend un arbre et une chambre de combustion alimentée en carburant. Avantageusement et selon l'invention, le régime de veille peut être un des régimes suivants :
- un régime de veille, dit ralenti usuel, dans lequel ladite chambre de combustion est allumée et ledit arbre du générateur de gaz tourne à une vitesse comprise entre 60 et 80% de la vitesse nominale,
- un régime de veille, dit super-ralenti usuel, dans lequel ladite chambre de combustion est allumée et ledit arbre du générateur de gaz tourne à une vitesse comprise entre 20 et 60% de la vitesse nominale,
- un régime de veille, dit super-ralenti assisté, dans lequel ladite chambre de combustion est allumée et ledit arbre du générateur de gaz tourne, assisté mécaniquement, à une vitesse comprise entre 20 et 60% de la vitesse nominale,
- un régime de veille, dit vireur, dans lequel ladite chambre de combustion est éteinte et ledit arbre du générateur de gaz tourne, assisté mécaniquement, à une vitesse comprise entre 5 et 20% de la vitesse nominale,
- un régime de veille, dit d'arrêt, dans lequel ladite chambre de combustion est éteinte et ledit arbre du générateur de gaz est à l'arrêt complet.

Chacun des régimes de veille susmentionnés peut donc être assisté par le pack électrotechnique pour maintenir le turbomoteur hybride dans un régime de veille prédéterminé. Cette assistance électrique peut être directement prélevée sur le réseau de bord de l'hélicoptère ou prélevée sur le dispositif de stockage d'énergie. De préférence, l'assistance est prélevée sur le réseau de bord pour que le dispositif de stockage garde le maximum d'énergie pour permettre une sortie de veille, notamment d'urgence, du turbomoteur hybride. Par exemple, dans le cas du régime vireur, le réseau de bord peut alimenter un dispositif d'assistance mécanique du générateur de gaz du turbomoteur hybride.

Avantageusement et selon l'invention, le pack de redémarrage rapide comprend une machine électrique adaptée pour redémarrer ledit turbomoteur dans des conditions normales de sortie de veille, et un dispositif de sortie de veille d'urgence adapté pour redémarrer ledit turbomoteur dans des conditions d'urgence de sortie de veille.

Selon cette variante, le pack électrotechnique de redémarrage comprend un dispositif de stockage d'énergie, une machine électrique et un dispositif de sortie d'urgence. Ce dispositif de sortie d'urgence peut être peut être un dispositif électrotechnique, pyrotechnique, pneumatique ou hydraulique .

Un régime de sortie de veille d'urgence est un régime dans lequel la chambre de combustion est allumée et l'arbre du générateur de gaz est entraîné vers une vitesse comprise entre 80 et 105%, dans un délai inférieur à 10s après une commande de sortie de veille.

Un régime de sortie de veille normale, est un régime dans lequel la chambre de combustion est allumée et l'arbre du générateur de gaz est entraîné vers une vitesse comprise entre 80 et 105%, dans un délai compris entre 10s et 1min après une commande de sortie de veille.

L'invention concerne également un hélicoptère comprenant un système propulsif caractérisé en ce que ledit système propulsif présente une architecture selon l'invention.

L'invention concerne également une architecture d'un système propulsif d'un hélicoptère multi-moteurs et un hélicoptère équipé d'un système propulsif présentant une telle architecture caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique d'une architecture d'un système propulsif d'un hélicoptère bimoteur selon un mode de réalisation de l'invention,
- la figure 2 est une vue schématique d'une architecture d'un système propulsif d'un hélicoptère bimoteur selon un autre mode de réalisation de l'invention,
- la figure 3a est une vue schématique de l'architecture de la figure 1 au cours d'une phase de vol classique dans laquelle tous les turbomoteurs fonctionnent à un régime permettant de fournir de la puissance mécanique,
- la figure 3b est une vue schématique de l'architecture de la figure 1 au cours d'une phase de vol économique dans laquelle un turbomoteur est en régime de veille
- la figure 3c est une vue schématique de l'architecture de la figure 1 au cours d'une phase de sortie de veille normale du turbomoteur en veille
- la figure 3d est une vue schématique de l'architecture de la figure 1 au cours d'une phase de sortie de veille d'urgence suite à une panne de l'autre turbomoteur.

### 6. Description détaillée d'un mode de réalisation de l'invention

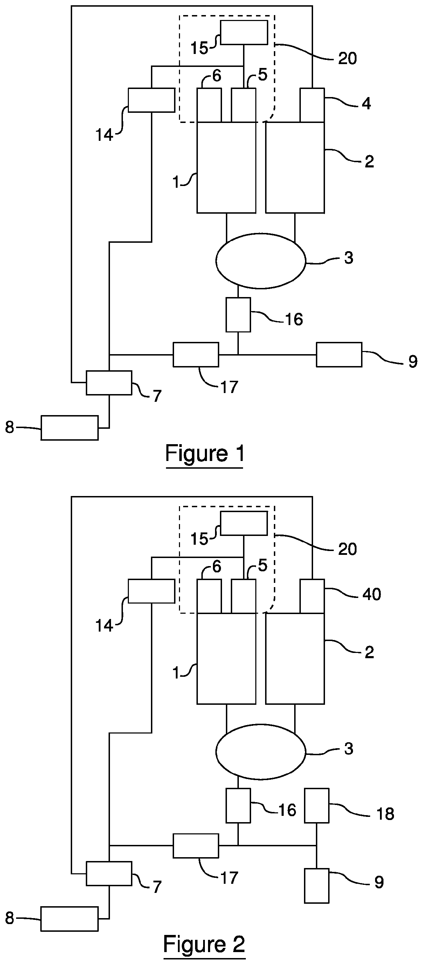

La figure 1 est une vue schématique d'une architecture d'un système propulsif d'un hélicoptère bimoteur selon un mode de réalisation de l'invention. Cette architecture comprend deux turbomoteurs 1, 2 reliés à une boîte 3 de transmission de puissance. Chaque turbomoteur 1, 2 est piloté par un dispositif de contrôle-commande propre non représenté sur les figures à des fins de clarté. L'architecture comprend en outre un réseau de bord 7 basse tension continue de 28 volts destiné à alimenter en courant différents équipements de l'hélicoptère non représentés sur les figures à des fins de clarté.

Chaque turbomoteur comprend un générateur de gaz et une turbine libre solidaire d'un arbre de sortie entrainée en rotation par le générateur de gaz. L'arbre de sortie de chaque turbine libre est adapté pour mettre en mouvement la boite 3 de transmission de puissance (désignée ci-après par l'acronyme BTP), qui entraîne elle-même le rotor de l'hélicoptère équipé par exemple de pales à pas variable.

Selon l'invention, le turbomoteur 1 est un turbomoteur hybride, apte à fonctionner dans au moins un régime de veille au cours d'un vol stabilisé de l'hélicoptère.

Ce régime de veille est de préférence choisi parmi les régimes de fonctionnement suivants :
- un régime de veille, dit ralenti usuel, dans lequel la chambre de combustion est allumée et l'arbre du générateur de gaz tourne à une vitesse comprise entre 60 et 80% de la vitesse nominale,
- un régime de veille, dit super-ralenti usuel, dans lequel la chambre de combustion est allumée et l'arbre du générateur de gaz tourne à une vitesse comprise entre 20 et 60% de la vitesse nominale,
- un régime de veille, dit super-ralenti assisté, dans lequel la chambre de combustion est allumée et l'arbre du générateur de gaz tourne, assisté mécaniquement, à une vitesse comprise entre 20 et 60% de la vitesse nominale,
- un régime de veille, dit vireur, dans lequel la chambre de combustion est éteinte et l'arbre du générateur de gaz tourne, assisté mécaniquement, à une vitesse comprise entre 5 et 20% de la vitesse nominale,
- un régime de veille, dit d'arrêt, dans lequel la chambre de combustion est éteinte et l'arbre du générateur de gaz est à l'arrêt complet.

L'architecture comprend en outre un pack 20 électrotechnique de redémarrage rapide du turbomoteur 1 hybride pour le sortir du régime de veille et atteindre un régime permettant de fournir de la puissance mécanique à la boite de transmission de puissance. Ce pack 20 est un pack haute tension agencé entre le turbomoteur 1 et le RDB 7 par l'intermédiaire d'un convertisseur 14 haute tension-basse tension.

Selon le mode de réalisation des figures, le pack 20 électrotechnique de redémarrage rapide comprend une machine 5 électrique adaptée pour redémarrer le turbomoteur 1 hybride dans des conditions normales de sortie de veille (c'est-à-dire dans un délai compris entre 10s et 1min après la commande de sortie de veille du turbomoteur 1). Il comprend également un dispositif 6 de sortie de veille d'urgence adapté pour redémarrer le turbomoteur 1 dans des conditions d'urgence de sortie de veille (c'est à dire dans un délai inférieur à 10s après la commande de sortie de veille du turbomoteur 1). Il comprend également un dispositif 15 de stockage d'énergie adapté pour accumuler de l'énergie électrique fournie par le RDB 7 lorsque le turbomoteur 1 hybride est en veille, et pour fournir l'énergie électrique nécessaire à la machine 5 électrique et au dispositif 6 de sortie de veille pour redémarrer le turbomoteur 1 hybride.

Une architecture selon l'invention comprend en outre deux sources d'alimentation électrique du RDB 7.

Selon le mode de réalisation de la figure 1, la première source d'alimentation du RDB 7 est une génératrice 16 délivrant une tension de 115 volts alternative. La génératrice 16 est agencée entre la BTP 3 et le RDB 7, et est associée à un convertisseur 17 alternatif-continu. Selon le mode de réalisation de la figure 1, la seconde source d'alimentation du RDB 7 est une génératice-démarreur 4 délivrant une tension de 28 volts continue, qui est agencée entre le turbomoteur 2 et le RDB 7. Cette génératrice-démarreur 4 est adaptée pour assurer le premier démarrage du turbomoteur 2 et pour assurer l'alimentation du RDB 7 en vol.

Selon le mode de réalisation de la figure 2, la première source d'alimentation du RDB 7 est toujours la génératrice 16 agencée entre la BTP 3 et le RDB 7, associée au convertisseur 17 alternatif-continu. En revanche, la seconde source d'alimentation du RDB 7 est une unité 18 auxiliaire de puissance délivrant une tension de 115 volts alternative et reliée audit convertisseur 17 alternatif-continu. Dans ce mode de réalisation, la génératrice-démarreur 4 de l'architecture de la figure 1 est remplacée par un démarreur 40 qui ne présente que la fonction de démarrage du turbomoteur 2.

Selon d'autres modes de réalisation, non représentés sur les figures, d'autres combinaisons de sources d'alimentation du RDB 7 peuvent être mis en œuvre, telles que deux génératrices agencées entre la BTP 3 et le RDB 7.

Chaque architecture comprend en outre des équipements 9 alimentés directement par la génératrice 16 en courant alternatif haute tension ou par l'APU 18. Elle comprend également une batterie 8 de stockage basse tension.

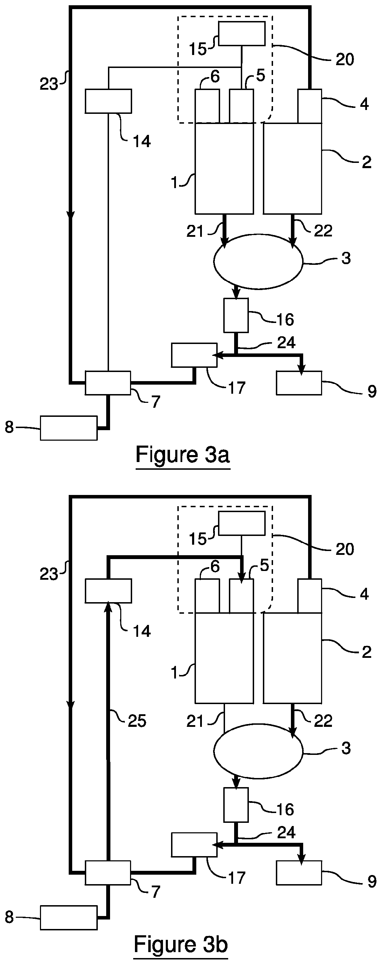

Dans la suite, le principe de fonctionnement de l'architecture de la figure 1 est expliqué en détail, en lien avec les figures 3a à 3d. Sur les figures 3a à 3d, les traits en gras représentent les principaux circuits de puissance (mécaniques ou électriques) actifs entre les différents organes représentés.

La figure 3a est une vue schématique de l'architecture de la figure 1 au cours d'une phase de vol classique, c'est-à-dire d'une phase de vol au cours de laquelle les deux turbomoteurs 1, 2 fournissent de la puissance à la BTP 3. Il s'agit par exemple d'une phase de décollage ou d'atterrissage au cours de laquelle l'hélicoptère a besoin de la disponibilité de la pleine puissance des moteurs. Les deux voies 21, 22 de puissance actives entre les turbomoteurs 1, 2 et la BTP 3 sont schématiquement représentées par des traits gras sur la figure 3a. L'alimentation électrique du RDB 7 est fiabilisée par deux circuits distincts d'alimentation. Le premier circuit 23 alimente le RDB 7 par la génératrice-démarreur 4 du turbomoteur 2. Le second circuit 24 alimente le RDB 7 par la génératrice 16 associée au convertisseur 17 alternatif-continu.

La figure 3b est une vue schématique de l'architecture de la figure 1 au cours d'une phase de vol économique, c'est-à-dire d'une phase de vol au cours de laquelle le turbomoteur 1 est placé dans un régime de veille de telle sorte que seul le turbomoteur 2 fournit de la puissance à la BTP 3. Ainsi, seule la voie 22 de puissance est active. L'alimentation électrique du RDB 7 est fiabilisée par les deux circuits d'alimentation décrits en lien avec la figure 3a. Le premier circuit 23 alimente le RDB 7 par la génératrice-démarreur 4 du turbomoteur 2. Le second circuit 24 alimente le RDB 7 par la génératrice 16 associée au convertisseur 17 alternatif-continu. Le mode veille du turbomoteur 1 est assisté par le pack 20 électrotechnique qui maintient le turbomoteur 1 à un régime de veille prédéterminé. Cette assistance est représentée schématiquement sur la figure 3b par le circuit 25. Ce circuit comprend un convertisseur 14 basse tension-haute tension agencé entre le RDB 7 et le pack 20 électrotechnique.

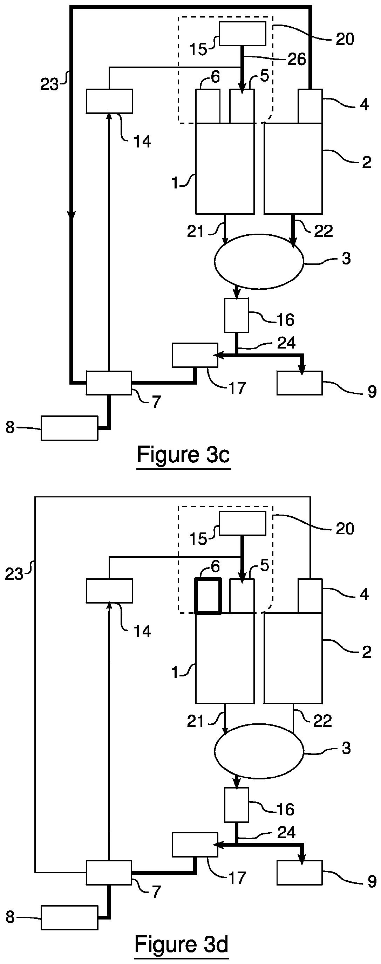

La figure 3c est une vue schématique de l'architecture de la figure 1 au cours d'une phase de redémarrage du turbomoteur 1, en sortie normale de veille. Le turbomoteur 2 fournit de la puissance à la BTP 3. La voie 22 de puissance est donc active. La voie 21 de puissance est en cours d'activation. Pour ce faire, la machine 5 électrique assure le démarrage du turbomoteur 1 en utilisant l'énergie stockée dans le dispositif 15 de stockage d'énergie. L'alimentation de la machine 5 électrique est schématiquement représentée par le circuit 26 en gras sur la figure 3c. L'alimentation électrique du RDB 7 est fiabilisée par les deux circuits d'alimentation décrits en lien avec les figures 3a et 3b. Le premier circuit 23 alimente le RDB 7 par la génératrice-démarreur 4 du turbomoteur 2. Le second circuit 24 alimente le RDB 7 par la génératrice 16 associée au convertisseur 17 alternatif-continu.

La figure 3d est une vue schématique de l'architecture de la figure 1 au cours d'une phase de perte du turbomoteur 2 et de redémarrage d'urgence du turbomoteur 1. Au cours de cette phase, le turbomoteur 2 est donc en panne et ne fournit plus aucune puissance à la BTP 3. La voie 22 de puissance est donc inactive. La voie 21 de puissance est en cours d'activation. Pour ce faire, le dispositif 6 de sortie de veille d'urgence assure le démarrage d'urgence du turbomoteur 1. L'activation du dispositif 6 de sortie de veille d'urgence dépend du type de dispositif utilisé. Un tel dispositif 6 de sortie de veille d'urgence est par exemple le dispositif au propergol décrit dans la demande FR 1358996 au nom du demandeur. L'alimentation électrique du RDB 7 est assurée par le second circuit 24 qui alimente le RDB 7 par la génératrice 16. En revanche, le premier circuit 23 ne permet plus d'alimenter le RDB 7 en cas de panne du turbomoteur 2 par la génératrice-démarreur 4.
L'invention ne se limite pas aux seuls modes de réalisation décrits. En particulier, l'architecture peut comprendre trois turbomoteurs pour l'équipement d'un hélicoptère tri moteur tout en présentant un fonctionnement *mutatis mutandis* identique à celui décrit en lien avec une application bi-moteur.

## Revendications

1. Architecture d'un système propulsif d'un hélicoptère multi-moteur comprenant des turbomoteurs (1, 2) reliés à une boite (3) de transmission de puissance, et un réseau (7) de bord basse tension continue destiné à alimenter en vol des équipements de l'hélicoptère,
**caractérisée en ce qu'**elle comprend :
- un seul turbomoteur parmi lesdits turbomoteurs, dit turbomoteur
(1) hybride, apte à fonctionner dans au moins un régime de veille au cours d'un vol stabilisé de l'hélicoptère, les autres turbomoteurs
(2) fonctionnant seuls au cours de ce vol stabilisé,
- un pack (20) électrotechnique de redémarrage rapide dudit turbomoteur hybride pour le sortir dudit régime de veille et atteindre un régime, dit régime nominal, dans lequel il fournit une puissance mécanique à ladite boite de transmission de puissance, ledit pack (20) de redémarrage étant relié audit réseau (7) de bord, ledit pack (20) de redémarrage étant un pack haute tension,
- au moins deux sources (4, 16, 18) d'alimentation électrique dudit réseau (7) de bord, et
- un convertisseur (14) basse tension-haute tension agencé entre ledit réseau (7) de bord et ledit pack (20) de redémarrage.

2. Architecture selon la revendication 1, **caractérisée en ce que** lesdites sources (4, 16, 18) d'alimentation électrique dudit réseau (7) de bord sont choisies dans le groupe comprenant :
- au moins une génératrice (16) de courant agencée entre ladite boite (3) de transmission de puissance et ledit réseau (7) de bord associée à un convertisseur (17) alternatif-continu,
- une unité (18) auxiliaire de puissance reliée audit réseau (7) de bord associée à un convertisseur (17) alternatif-continu,
- une génératrice-démarreur (4) agencée entre un turbomoteur (2) non hybride et ledit réseau (7) de bord.

3. Architecture selon la revendication 2, **caractérisée en ce que** chaque génératrice (16) de courant et ladite unité (18) auxiliaire de puissance sont adaptées pour fournir une tension alternative de 115 volts et **en ce que** ledit convertisseur (17) associé est adapté pour convertir cette tension alternative de 115 volts en une tension continue de 28 volts.

4. Architecture selon l'une des revendications 1 à 3, **caractérisée en ce que** ledit pack (20) électrotechnique comprend un dispositif (15) de stockage d'énergie électrique adapté pour accumuler de l'énergie électrique dudit réseau (7) de bord au cours dudit régime nominal dudit turbomoteur (1) hybride et pour fournir, sur commande d'une sortie de veille, l'énergie électrique accumulée nécessaire au turbomoteur (1) hybride pour assurer son démarrage.

5. Architecture selon l'une des revendications 1 à 4, **caractérisée en ce que** ledit pack (20) de redémarrage est adapté pour fournir, en régime de veille dudit turbomoteur (1) hybride, une énergie électrique de maintien dudit turbomoteur hybride (1) à un régime de veille prédéterminé.

6. Architecture selon l'une des revendications 1 à 5, **caractérisée en ce que** ledit pack (20) de redémarrage rapide comprend une machine (5) électrique adaptée pour redémarrer ledit turbomoteur (1) dans des conditions normales de sortie de veille, et un dispositif (6) de sortie de veille d'urgence adapté pour redémarrer ledit turbomoteur (1) dans des conditions d'urgence de sortie de veille.

7. Architecture selon la revendication 6, **caractérisée en ce que** ledit dispositif (6) de sortie de veille d'urgence est choisi dans le groupe comprenant un dispositif électrotechnique, un dispositif pyrotechnique, un dispositif pneumatique et un dispositif hydraulique.

8. Hélicoptère comprenant un système propulsif **caractérisé en ce que** ledit système propulsif présente une architecture selon l'une des revendications 1 à 7.

## Patentansprüche

1. Architektur eines mehrmotorigen Hubschrauberantriebssystems, das Turbomotoren (1, 2), die mit einem Leistungsübertragungsgetriebe (3) verbunden sind, und ein Niedergleichspannungsbordnetz (7), das dazu bestimmt ist, Ausstattungen des Hubschraubers während des Flugs zu versorgen, umfasst,
**dadurch gekennzeichnet, dass** sie Folgendes umfasst:
- einen einzigen Turbomotor unter den Turbomotoren, Hybridturbomotor (1) genannt, der geeignet ist, im Laufe eines stabilisierten Flugs des Hubschraubers in mindestens einem Standby-Betrieb zu funktionieren, wobei die anderen Turbomotoren (2) im Laufe dieses stabilisierten Flugs allein funktionieren,
- einen elektrotechnischen Pack (20) zum schnellen Neustarten des Hybridturbomotors, um ihn aus dem Standby-Betrieb austreten, und eine Drehzahl, die Nenndrehzahl genannt wird, erreichen zu lassen, in der er dem Leistungsübertragungsgetriebe eine mechanische Leistung bereitstellt, wobei der Pack (20) zum Neustarten mit dem Bordnetz (7) verbunden ist, wobei der Pack (20) zum Neustarten ein Hochspannungspack ist,
- mindestens zwei Stromversorgungsquellen (4, 16, 18) des Bordnetzes (7), und
- einen Niederspannungs-Hochspannungswandler (14), der zwischen dem Bordnetz (7) und dem Pack (20) zum Neustarten eingerichtet ist.

2. Architektur nach Anspruch 1, **dadurch gekennzeichnet, dass** die Stromversorgungsquellen (4, 16, 18) des Bordnetzes (7) aus der Gruppe ausgewählt sind, die Folgendes umfasst:
- mindestens einen Stromgenerator (16), der zwischen dem Leistungsübertragungsgetriebe (3) und dem Bordnetz (7) eingerichtet ist, der mit einem Wechselstrom-Gleichstromwandler (17) assoziiert ist,
- eine Leistungshilfseinheit (18), die mit dem Bordnetz (7) verbunden ist, die mit einem Wechselstrom-Gleichstromwandler (17) assoziiert ist,
- einen Starter- Generator (4), der zwischen einem Nicht-Hybrid-Turbomotor (2) und dem Bordnetz (7) eingerichtet ist.

3. Architektur nach Anspruch 2, **dadurch gekennzeichnet, dass** jeder Stromgenerator (16) und die Leistungshilfseinheit (18) angepasst sind, um eine Wechselspannung von 115 Volt bereitzustellen, und dadurch, dass der assoziierte Wandler (17) angepasst ist, um diese Wechselspannung von 115 Volt in eine Gleichspannung von 28 Volt umzuwandeln.

4. Architektur nach einem der Ansprüche 1 bis 3, **dadurch gekennzeichnet, dass** der elektrotechnische Pack (20) eine Speichervorrichtung (15) für elektrische Energie umfasst, die angepasst ist, um die elektrische Energie des Bordnetzes (7) im Laufe der Nenndrehzahl des Hybridturbomotors (1) zu kumulieren und um auf Befehl eines Stand-by-Austritts dem Hybridturbomotor (1) die erforderliche kumulierte elektrische Energie bereitzustellen, um für dessen Start zu sorgen.

5. Architektur nach einem der Ansprüche 1 bis 4, **dadurch gekennzeichnet, dass** der Pack (20) zum Neustarten angepasst ist, um im Standby-Betrieb des Hybridturbomotors (1) eine elektrische Energie zum Halten des Hybridturbomotors (1) in einem vorbestimmten Standby-Betrieb bereitzustellen.

6. Architektur nach einem der Ansprüche 1 bis 5, **dadurch gekennzeichnet, dass** der Pack (20) zum schnellen Neustarten eine Elektromaschine (5) umfasst, die angepasst ist, um den Turbomotor (1) unter normalen Bedingungen eines Stand-by-Austritts neu zu starten, und eine Not-Stand-by-Austrittsvorrichtung (6), die angepasst ist, um den Turbomotor (1) unter den Not-Stand-by-Austrittsbedingungen neu zu starten.

7. Architektur nach Anspruch 6, **dadurch gekennzeichnet, dass** die Not-Stand-by-Austrittsvorrichtung (6) aus der Gruppe ausgewählt ist, die eine elektrotechnische Vorrichtung, eine pyrotechnische Vorrichtung, eine pneumatische Vorrichtung und eine hydraulische Vorrichtung umfasst.

8. Hubschrauber, ein Antriebssystem umfassend, **dadurch gekennzeichnet, dass** das Antriebssystem eine Architektur nach einem der Ansprüche 1 bis 7 aufweist.

## Claims

1. Architecture of a propulsion system of a multi-engine helicopter, comprising turboshaft engines (1, 2) that are connected to a power transmission gearbox (3), and comprising a low DC voltage onboard network (7) for supplying power to helicopter equipment during flight,
**characterised in that** it comprises:
- only one turboshaft engine among said turboshaft engines, referred to as a hybrid turboshaft engine (1), which is capable of operating in at least one standby mode during a stable flight of the helicopter, the other turboshaft engines (2) operating alone during this stable flight,
- an electrotechnical pack (20) for quickly restarting said hybrid turboshaft engine in order bring said engine out of said standby mode and to reach a mode referred to as the nominal mode, in which it provides mechanical power to said power transmission gearbox, said restart pack (20) being connected to said onboard network (7), said electrotechnical pack (20) for quick restart being a high-voltage pack,
- at least two sources (4, 16, 18) of electrical power for said onboard network (7), and
- a low voltage-high voltage converter (14) is arranged between said onboard network (7) and said rapid restart pack (20)

2. Architecture according to claim 1, **characterised in that** said sources (4, 16, 18) of electrical power for said onboard network (7) are selected from the group comprising:
- at least one current generator (16) that is arranged between said power transmission gearbox (3) and said onboard network (7) and is associated with an AC-DC converter (17),
- an auxiliary power unit (18) that is connected to said onboard network (7) and associated with an AC-DC converter (17),
- a starter-generator (4) that is arranged between a non-hybrid turboshaft engine (2) and said onboard network (7).

3. Architecture according to claim 2, **characterised in that** each current generator (16) and said auxiliary power unit (18) are capable of providing an AC voltage of 115 volts, and **in that** said associated converter (17) is capable of converting said 115-volt AC voltage into a DC voltage of 28 volts.

4. Architecture according to any of claims 1 to 3, **characterised in that** said electrotechnical pack (20) comprises an electrical energy storage device (15) which is capable of accumulating electrical energy from said onboard network (7) during said nominal mode of said hybrid turboshaft engine (1), and which, following a command to leave standby, is capable of providing the hybrid turboshaft engine (1) with the accumulated electrical energy that is necessary to ensure restart thereof.

5. Architecture according to any of claims 1 to 4, **characterised in that** said restart pack (20) is capable of providing, when said hybrid turboshaft engine (1) is in standby mode, electrical energy for keeping said hybrid turboshaft engine (1) in a predetermined standby mode.

6. Architecture according to any of claims 1 to 5, **characterised in that** said quick restart pack (20) comprises an electrical machine (5) that is capable of restarting said turboshaft engine (1) when leaving standby in normal conditions, and a device (6) for leaving standby in an emergency that is capable of restarting said turboshaft engine (1) when leaving standby in emergency conditions.

7. Architecture according to claim 6, **characterised in that** said device (6) for leaving standby in an emergency is selected from the group comprising an electrotechnical device, a pyrotechnic device, a pneumatic device and a hydraulic device.

8. Helicopter comprising a propulsion system, **characterised in that** said propulsion system has an architecture according to any of claims 1 to 7.
